Europäisches Patentamt

European Patent Office

Office européen des brevets

(19)

(11) Publication number: **0 227 062 B1**

# EUROPEAN PATENT SPECIFICATION

(12)

(45) Date of publication of patent specification: **08.07.92**  (51) Int. Cl.⁵: **G01N 21/35**

(21) Application number: **86117745.9**

(22) Date of filing: **19.12.86**

(54) **Analyzer.**

(30) Priority: **23.12.85 JP 290258/85**

(43) Date of publication of application:
**01.07.87 Bulletin 87/27**

(45) Publication of the grant of the patent:
**08.07.92 Bulletin 92/28**

(84) Designated Contracting States:
**DE FR GB**

(56) References cited:
**WO-A-84/00217**   **DD-A- 103 965**
**DE-U- 8 305 028**   **FR-A- 661 375**
**GB-A- 2 146 117**   **US-A- 3 959 660**

(73) Proprietor: **HORIBA, LTD.**
**2 Miyanohigashi-machi Kissyoin**
**Minami-ku Kyoto(JP)**

(72) Inventor: **Miyatake, Kimio 2-205, Takano**
**Jyutaku No. 2, 1-7, Takano-Higashihiraki-cho**
**Sakyo-ku Kyoto(JP)**
Inventor: **Imaki, Takao**
**9-4, 1-chome, Baba**
**Nagaokakyo-City Kyoto(JP)**
Inventor: **Fujiwara, Masahiko**
**25-404, Nishi, 9, 2-chome Katayama-cho**
**Suita-City Osaka(JP)**

(74) Representative: **TER MEER - MÜLLER - STEIN-**
**MEISTER & PARTNER**
**Mauerkircherstrasse 45**
**W-8000 München 80(DE)**

EP 0 227 062 B1

## Description

The present invention relates to an analyzer comprising a light source, a cell and a detector.

In general, with an analyzer such as an infrared gas analyzer, the larger the quantity of light incident upon a cell from a light source is, the higher is the detecting sensitivity and, as a result, the measurement accuracy.

Although in general an electrically heated resistor is used as a light source for analyzers of the said kind, such a light source can not be a so-called point light source due to the necessary electrical resistance and the desired life time, but it has a certain geometrical size. This results in the disadvantage that the light from said light source is diffuse, whereby the quantity of light incident upon the cell is necessarily reduced.

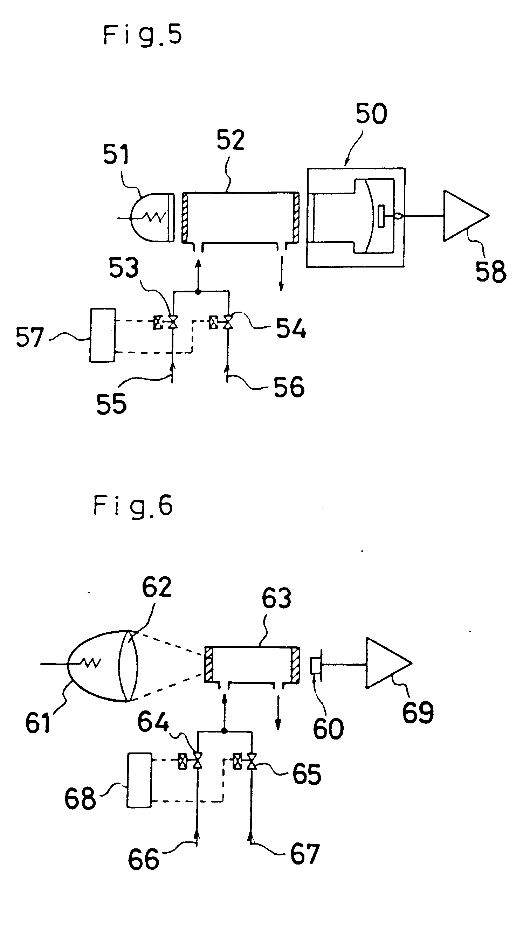

In conventional analyzers, as shown in Fig. 5, e. g. in the case where a pneumatic detector with a relatively large light-receiving surface is used as a detector 50, the detecting sensitivity has been increased by confining the light from a light source 51 incident upon a cell 52 within an appointed width. Further, as shown in Fig. 6, e.g. in the case where a solid detector having a relatively small light-receiving surface is used as a detector 60, the detecting sensitivity has been increased by collecting the light from a light source 61 by means of a lens 62 with high permeability for infrared rays and making this collected light incident upon a cell 63. Also, by using a laser as the light source 61, the quantity of light incident upon the cell can be increased.

Referring to said Figs. 5, 6, reference numerals 53, 54 and 64, 65 designate electro-magnetic valves provided in reference-gas supply routes 55, 66 and sample-gas supply routes 56, 67, respectively; 57, 68 designate controllers for controlling the opening and closing these electro-magnetic valves 53, 54, 64, 65; and 58, 69 designate pre-amplifiers.

However, in the above described prior art analyzers as shown in Fig. 5, since a cell 52 with a large sectional area corresponding to the size of a light-receiving surface of the detector 50 must be used, the volume of the cell 52 is increased, in particular in the case of a fluid modulation type gas analyzer. This implies the disadvantage that the analyzer requires a large amount of gas and this is expensive. Also, using a lens or a laser is expensive.

A light source corresponding to the light source 51 of Fig. 5 is described in detail e. g. in DE-U-83 05 028. Another, similar light source, having a tapered housing instead of a semicircular housing is described in GB-A-2 146 117. In the analyzer of the just mentioned application, the light source side window closing the cell at the light source side is at the same time the window which closes the housing of the light source.

US-A-3,959,660 describes an infrared generator, e. g. a light source wherein an ellipsoidal reflector has a source rich in infrared radiation at one focus thereof. The end of the reflector at the other focus merges with the colloidal reflector positioned so that the focus of the latter reflector coincides with the said other focus of the former. The axis of the reflectors intersect to each other preferably at right angles. This light source is rather complicated and with this expensive.

It is the object of the present invention to provide an analyzer comprising a light source, a cell and a detector, in which analyzer the light source has a simple and inexpensive, but effective structure.

The analyzer of the present invention is characterized in that the housing of the light source is made of a body having at its inside a reflective surface and two focal points, whereby the light source is mounted close to the focal point distant from the cell and the cell is arranged to have its light source side window close to the other focal point.

Due to this construction, diffuse light radiated from said light source is reflected towards the focus which is close to the cell. Accordingly, said reflected light is incident upon the cell in addition to the directly incident light, so that the quantity of light incident upon the cell is remarkably increased against the prior art, in which e. g. a lense is used for focusing the light. Thereby, the detecting sensitivity and the measurement accuracy can be improved.

The housing body has e. g. the shape of an ellipsoid or a combination of two hyperboloids or two paraboloids or the like. It may also be formed as a combination of e. g. a hyperboloid and a paraboloid.

The light source and the one end side of the cell may be positioned in the vicinity of the focal points within some tolerance.

Preferred embodiments of the present invention are below described by block diagrams with reference to the drawings wherein

| | |
|---|---|
| Fig. 1 | shows one example of a single cell infrared gas analyzer to which the present invention is applied; |
| Figs. 2 and 3 | serve for explaining advantageous features of the invention; |
| Fig. 4 | depicts an example of a double-cell type analyzer including an embodiment of the invention; and |
| Figs. 5 and 6 | are block diagrams showing |

conventional analyzers as explained above.

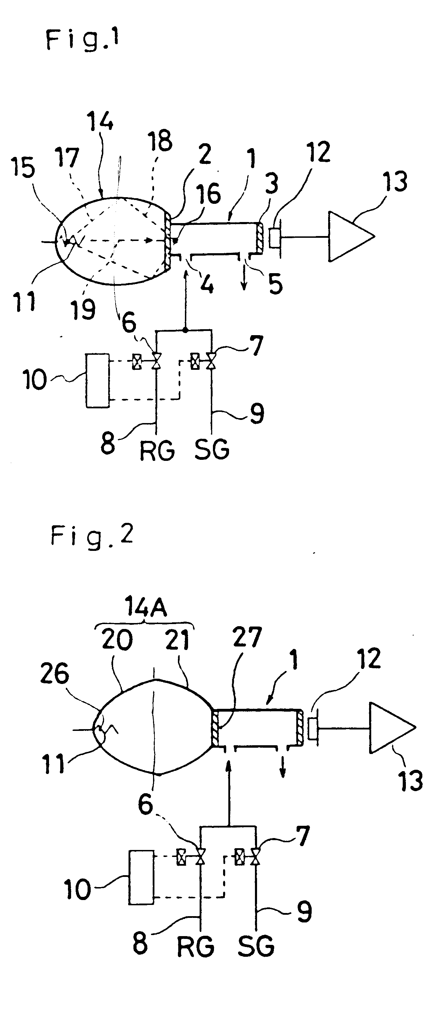

Referring to Fig. 1, reference numeral 1 designates a cell whose both end portions are tightly closed by cell windows 2, 3, and reference numerals 4, 5 designate a gas inlet port and a gas outlet port, respectively.

Electro-magnetic valves 6, 7 are provided in a reference-gas supply route 8 and a sample-gas supply route 9, respectively, and are controlled for opening and closing by a control signal from a controller 10 so that an appointed amount of a reference gas RG and a sample gas SG may be alternately supplied to said cell 1 at a predetermined cycle.

A light source 11 is positioned opposite to one cell window 2, and a detector 12 is arranged opposite to the other cell window 3, for example a solid detector (also a pneumatic detector may be used), and 13 designates a preamplifier.

A housing body 14 is provided with a mirror-finished inside circumferential surface having an oval cross section covering the light source 11 and one cell window 2 in a tightly closed manner. The housing body 14 is arranged such that one focus 15 nearly coincides with said light source 11 whereas the other focus 16 may be positioned inside from the cell window 2 in the cell 1.

In the analyzer constructed in the above described manner, since the light source 11 is positioned in one focus 15, the scattered light 17 of the light radiated from this light source 11 is reflected by the inside circumferential surface of the housing body 14 and the reflected light 18 is collected to the other focus 16 of said housing body 14 incidenting upon the cell 1. Thus, since said reflected light 18 is impinging upon the cell 1 in addition to the light 19 directly incidenting upon the cell 1 from the light source 11 (hereinafter referred to as the direct incident light), the quantity of light incidenting upon said cell 1 is remarkably increased and the detecting sensitivity is considerably enhanced whereby a highly accurate measurement can be achieved.

According to measurements, the output efficiency of an analyzer constructed in the above described manner was about 1.5 times that of a conventional analyzer as shown in Fig. 6.

As can be taken from the above description, the light radiated from the light source 11 can be efficiently accumulated upon the cell 1 by using a housing body 14 having two focuses, positioning the light source 11 in one focus 15 of said housing body 14, and arranging the one end side of the cell 1 in the other focus 16. However, the shape of the housing body 14 may be variously selected.

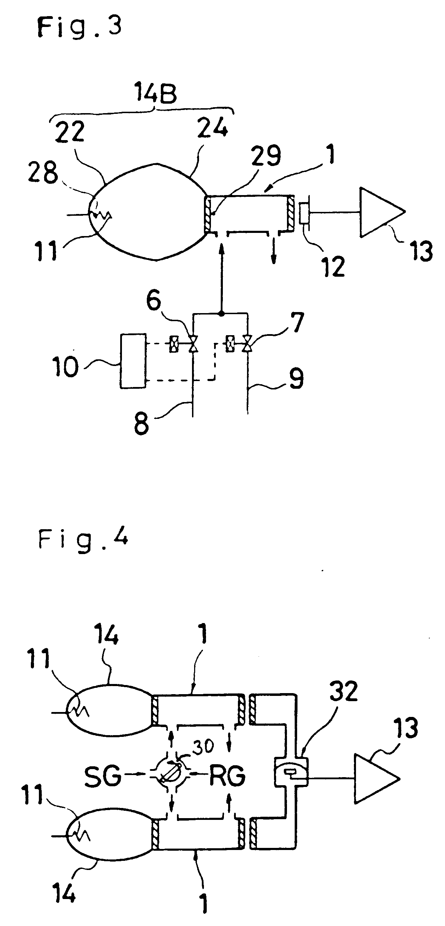

As shown in Fig. 2, the sectional shape of the housing body 14A may be a combination of two hyperboloids 20, 21 connected at the open sides thereof. Or, as shown in Fig. 3, the sectional shape of the housing body 14B may be a combination of two paraboloids 22, 24 connected at their open sides.

In Figs. 2, 3 the reference numerals 26, 27, 28, 29 designate the focuses, and it should be pointed out that the hyperboloids 20, 21 and said paraboloids 22, 24 must not necessarily be always identical.

Fig. 4 shows an application of the housing body 14 as shown in Fig. 1 to a double-cell type analyzer. Reference numeral 30 designates a gas route changing-over member provided with a rotatable body and reference numeral 32 designates a pneumatic type detector.

The present invention is not limited to the above described preferred embodiments. It can also be applied to analyzers in which an output modulation is carried out by means of a rotating chopper, or for analyzers in which ultraviolet rays are used or where the object to be analyzed is a liquid.

As above described, an analyzer according to the present invention has as characteristic features a housing body with a light source and one end side of a cell as focuses thereof, so that the diffuse light radiating from the light source is reflected by the inside circumferential surface of the housing body to the light input side of the cell, which input side is positioned in the other focus. Accordingly, said reflected light is incident upon the cell in addition to the light directly incident upon the cell without being scattered. Thus, the light radiated from the light source can be efficiently collected to incident upon the cell so that the detecting sensitivity is increased and a more accurate measurement can be achieved.

In an analyzer embodying the invention, a large quantity of light can be incident upon a cell even though the cell may have a small diameter and reduced volume whereby only small quantities of a fluid are required for the measurement. This effect is particularly advantageous in the case of a fluid-modulation type analyzer. Besides, since expensive lenses and/or a laser light source are not required, this type analyzer can be implemented inexpensively.

**Claims**

1. An analyzer comprising:
   - a cell (1) for accomodating a fluid to be analyzed, and being closed by a light source side window and a detector side window;
   - a light source (11) arranged at the light source side of said cell inside a housing (14, 14A, 14B);
- and a detector (12) arranged at the detector side of said cell, which is the side opposite to the light source side, seen in direction of the main axis of the light source,

**characterized in that** said housing (14, 14A, 14B) is made of a body, having at its inside a reflective surface and two focal points, whereby the light source (11) is mounted close to the focal point distant from the cell and the cell is arranged to have its light source side window (2) close to the other focal point.

2. An analyzer according to claim 1, **characterized in that** the cell (1) is arranged that the second focal points lies inside the cell.

3. An analyzer according to one of the claims 1 or 2, **characterized in that** said light source side window (2) closes said housing (14, 14A, 14B).

4. An analyzer according to one of the claims 1 to 3, **characterized in that** said housing (14A, 14B) is integrally made of two bodies having curved surfaces.

5. An analyzer according to claim 4, **characterized in that** at least one of said bodies is a body with oval cross section.

6. An analyzer according to one of the claims 4 or 5, **characterized in that** at least one of said bodies is an ellipsoid.

7. An analyzer according to one of the claims 4 to 6, **characterized in that** at least one of said bodies is a hyperboloid.

8. An analyzer according to one of the claims 4 to 7, **characterized in that** at least one of said bodies is a paraboloid.

## Revendications

1. Analyseur comportant :
- une cellule (1) pour recevoir un fluide à analyser, et étant fermée par une fenêtre côté source lumineuse et une fenêtre côté détecteur ;
- une source lumineuse (11) disposée sur le côté source lumineuse de ladite cellule à l'intérieur d'une enveloppe (14, 14A, 14B) ;
et un détecteur (12) disposé sur le côté détecteur de ladite cellule, qui est le côté opposé au côté de la source lumineuse, en regardant dans le sens de l'axe principal de la source lumineuse ;
caractérisé en ce que ladite enveloppe (14, 14A, 14B) est constituée d'un corps, possédant à l'intérieur une surface réfléchissante et deux points focaux, de telle sorte que la source lumineuse (11) est disposée à proximité du point focal éloigné de la cellule et la cellule est agencée pour avoir sa fenêtre côté source lumineuse (2) à proximité de l'autre point focal.

2. Analyseur selon la revendication 1, caractérisé en ce que la cellule (1) est disposée de telle sorte que le second point focal se trouve à l'intérieur de la cellule.

3. Analyseur selon l'une des revendications 1 ou 2, caractérisé en ce que ladite fenêtre côté source lumineuse (2) ferme ladite enveloppe (14, 14A, 14B).

4. Analyseur selon l'une quelconque des revendications 1 à 3, caractérisé en ce que ladite enveloppe (14A, 14B) est réalisée d'une seule pièce par deux corps ayant des surfaces incurvées.

5. Analyseur selon la revendication 4, caractérisé en ce qu'au moins l'un desdits corps est un corps ovale en coupe.

6. Analyseur selon l'une quelconque des revendications 4 ou 5, caractérisé en ce qu'au moins l'un desdits corps est un ellipsoïde.

7. Analyseur selon l'une quelconque des revendications 4 à 6, caractérisé en ce qu'au moins l'un desdits corps est un hyperboloïde.

8. Analyseur selon l'une quelconque des revendications 4 à 7, caractérisé en ce qu'au moins l'un desdits corps est un paraboloïde.

## Patentansprüche

1. Analysiergerät mit:
- einer Zelle (1) zum Aufnehmen eines zu analysierenden Fluids, die durch ein lichtquellenseitiges Fenster und ein detektorseitiges Fenster verschlossen ist;
- einer Lichtquelle (11), die auf der lichtquellenseitigen Seite der Zelle innerhalb eines Gehäuses (14, 14A, 14B) angeordnet ist;
- und einem Detektor (12), der an der detektorseitigen Seite der Zelle angeordnet ist, bei der es sich um die der lichtquellenseitigen Seite gegenüberliegende Seite handelt, gesehen in Richtung der Hauptachse der Lichtquelle;

**dadurch gekennzeichnet,** daß das Gehäuse (14, 14A, 14B) aus einem Körper besteht, der an seiner Innenseite eine reflektierende Oberfläche und zwei Brennpunkte aufweist, wobei die Lichtquelle (11) dicht bei dem der Zelle abgewandten Brennpunkt angeordnet ist und die Zelle so angeordnet ist, daß ihr lichtquellenseitiges Fenster (2) dicht beim anderen Brennpunkt liegt.

2. Analysiergerät nach Anspruch 1, **dadurch gekennzeichnet,** daß die Zelle (1) so angeordnet ist, daß der zweite Brennpunkt innerhalb der Zelle liegt.

3. Analysiergerät nach einem der Ansprüche 1 oder 2, **dadurch gekennzeichnet,** daß das lichtquellenseitige Fenster (2) das Gehäuse (14, 14A, 14B) verschließt.

4. Analysiergerät nach einem der Ansprüche 1 bis 3, **dadurch gekennzeichnet,** daß das Gehäuse (14A, 14B) integral aus zwei Körpern mit gekrümmten Oberflächen gebildet ist.

5. Analysiergerät nach Anspruch 4, **dadurch gekennzeichnet,** daß zumindest einer der Körper ein solcher mit ovalem Querschnitt ist.

6. Analysiergerät nach einem der Ansprüche 4 oder 5, **dadurch gekennzeichnet,** daß zumindest einer der Körper ein Ellipsoid ist.

7. Analysiergerät nach einem der Ansprüche 4 bis 6, **dadurch gekennzeichnet,** daß zumindest einer der Körper ein Hyperboloid ist.

8. Analysiergerät nach einem der Ansprüche 4 bis 7, **dadurch gekennzeichnet,** daß zumindest einer der Körper ein Paraboloid ist.

Fig.1

Fig.2

EP 0 227 062 B1

Fig.3

Fig.4

Fig.5

Fig.6